Europäisches Patentamt

European Patent Office

Office européen des brevets

(11) Publication number: **0 400 603**
**A2**

## EUROPEAN PATENT APPLICATION

(21) Application number: **90110261.6**

(51) Int. Cl.⁵: **H04J 3/14**

(22) Date of filing: **30.05.90**

(30) Priority: **30.05.89 JP 138672/89**
          **11.07.89 JP 179302/89**

(43) Date of publication of application:
        **05.12.90 Bulletin 90/49**

(84) Designated Contracting States:
        **DE FR GB**

(71) Applicant: **NEC CORPORATION**
        **7-1, Shiba 5-chome Minato-ku**
        **Tokyo 108-01(JP)**

(72) Inventor: **Shimada, Naohiro c/o NEC**

Corporation
**7-1 Shiba 5-chome Minato-ku**
**Tokyo(JP)**
Inventor: **Ohno, Yasushi c/o NEC Miyagi. Ltd.**
**2, Aza Raijin Yohioka Taiwa-cho**
**Kurokawa-gun Miyagi(JP)**
Inventor: **Saito, Masaaki c/o NEC Miyagi. Ltd.**
**2, Aza Raijin Yoshioka Taiwa-cho**
**Kurokawa-gun Miyagi(JP)**

(74) Representative: **Vossius & Partner**
        **Siebertstrasse 4 P.O. Box 86 07 67**
        **D-8000 München 86(DE)**

(54) **Monitoring method for stand-by circuits suitable for a multiplexing/demultiplexing apparatus.**

(57) Described herein is a method of monitoring a plurality of independent stand-by circuits contained in a stand-by device which will be used when an active device fails. This method comprises the steps of generating a monitoring signal for monitoring the plurality of stand-by circuits, applying the monitoring signal to one of the plurality of stand-by circuits, performing a repetitive operation of feeding the monitoring signal routed through the one stand-by circuit to another stand-by circuit to which the monitoring signal has not been applied, and determining whether or not the plurality of stand-by circuits are normally operable on the basis of the monitoring signal having been routed through all of the plurality of stand-by circuits. This method facilitates the monitor-ing of stand-by circuits.

Fig. 8

# MONITORING METHOD FOR STAND-BY CIRCUITS SUITABLE FOR A MULTIPLEXING/DEMULTIPLEXING APPARATUS

## BACKGROUND OF THE INVENTION:

The present invention relates to a method of monitoring a circuit or an apparatus and, more particularly, to a method of monitoring stand-by circuits (apparatuses) installed in equipment having a redundant configuration.

Communication equipment or similar equipment which has to be extremely reliable is provided with a stand-by circuit which replaces an active circuit when the active circuit fails. Such equipment is also provided with a monitor for constantly monitoring the stand-by circuit, so that the stand-by circuit may function normally in the event of replacement. Typically, a dummy signal or similar monitoring signal is fed to the stand-by circuit so as to determine whether the circuit is operable normally on the basis of the resultant output signal of the circuit. It has been customary to provide a monitor of the type using such a monitoring method with monitoring signal generating circuits and monitoring signal receiving circuits each being associated with a particular stand-by circuit.

The conventional monitor as stated above has a problem left unsolved. Specifically, in the case of an apparatus for multiplexing communication channels, for example, the same number of monitoring signal generating circuits and the same number of receiving circuits as the channels are needed. This increases the overall dimensions, cost, and power consumption of the monitor.

## SUMMARY OF THE INVENTION

It is therefore an object of the present invention to provide a method which promotes easy monitoring of stand-by circuits.

A method of monitoring a plurality of independent stand-by circuits included in a stand-by device which will be used when an active device fails of the present invention comprises the steps of generating a monitoring signal for monitoring the plurality of stand-by circuits, applying the monitoring signal to one of the plurality of stand-by circuits, performing a repetitive operation of feeding the monitoring signal routed through the one stand-by circuit to another stand-by circuit to which the monitoring signal has not been applied, and determining whether or not the plurality of stand-by circuits are normally operable on the basis of the monitoring signal having been routed through all of the plurality of stand-by circuits.

## BRIEF DESCRIPTION OF THE DRAWINGS

The above and other objects, features and advantages of the present invention will become more apparent from the following detailed description taken with the accompanying drawings in which:

Fig. 1 is a block diagram schematically showing a time division multiplexing/demultiplexing system implemented by a prior art stand-by circuit monitoring method;

Fig. 2 is a block diagram schematically showing an embodiment of the present invention;

Fig. 3 is a block diagram schematically showing an alternative embodiment of the present invention;

Fig. 4 is a diagram showing a specific construction of a switching circuit included in the embodiment of Fig. 3;

Fig. 5 is a diagram showing another specific construction of the switching circuit shown in Fig. 3;

Fig. 6 is a block diagram showing another alternative embodiment of the present invention;

Fig. 7 is a diagram representative of a switching circuit included in the embodiment of Fig. 6;

Fig. 8 is a block diagram showing another alternative embodiment of the present invention;

Fig. 9 is a diagram showing a specific construction of a switching circuit included in the embodiment of Fig. 8; and

Fig. 10 is a block diagram showing a specific construction of a multiplexing/demultiplexing apparatus included in the embodiment of Fig. 8.

## DETAILED DESCRIPTION OF THE PREFERRED EMBODIMENTS

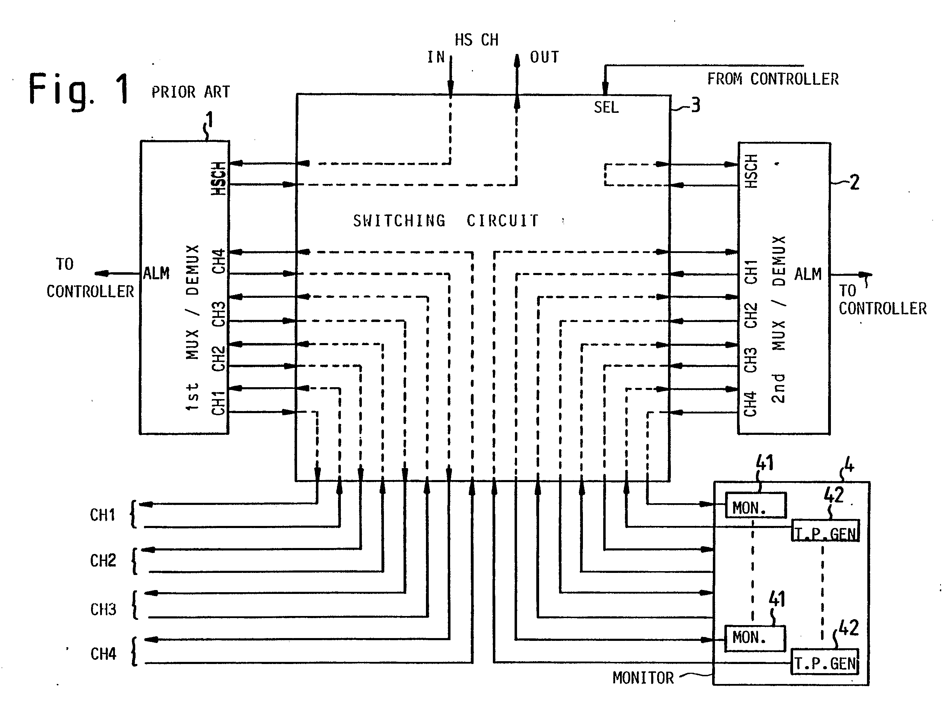

To better understand the present invention, a brief reference will be made to a prior art method of monitoring a stand-by circuit, shown in Fig. 1. As shown, the prior art method is applied to a time division multiplexing/demultiplexing apparatus having a one-to-one redundant construction by way of example. Specifically, the apparatus has a first and a second multiplexer/demultiplexer (MUX/DEMUX) 1 and 2 each being constructed to multiplex a first to a fourth lower order bit sequence (lower sequence channel) into a single higher order bit sequence (higher sequence channel) and to demultiplex multiplexed channels. A controller, not shown, conditions one of the MUX/DEMUXs 1 and 2 as an active unit and the other as a stand-by unit.

A monitor 4 has test pattern generating circuits 42 each being associated with respective one of the circuits to be monitored which are installed in the stand-by MUX/DEMUX, i.e., stand-by circuits. The monitor 4 also has monitor circuits 41 each of which detects an error of the associated stand-by circuit from a received signal. In this specific application, the method monitors four lower sequence channels and one higher sequence channel (HSCH), so that the monitor 4 has four test pattern generating circuits 42 and four monitor circuits 41. A switching circuit 3 couples the inputs of the four channels of lower sequence, the input and output of a test pattern for monitoring, and the input and output of the higher sequence channel to corresponding input and output terminals of the MUX/DEMUXs 1 and 2. Further, the switching circuit 3 short-circuits the higher sequence channel input and output of the stand-by MUX/DEMUX.

Assume that the first and second MUX/DEMUXs 1 and 2 are an active unit and a stand-by unit, respectively. Then, the switching circuit 3 connects corresponding input and output terminal as indicated by phantom lines in the figure. Specifically, the inputs and outputs of the monitor 4 are interconnected to the lower sequence channel inputs and outputs of the MUX/DEMUX 2, while the data on the first to fourth lower sequence channels are applied to the lower sequence inputs and outputs of the first MUX/DEMUX 1. The data on the HSCH are applied to the HSCH input and output of the MUX/DEMUX 1 while the HSCH input and output of the second MUX/DEMUX 2 are short-circuited.

The stand-by circuits are monitored as follows. The test pattern generating circuit 42 associated with the first lower sequence channel CH1 generates test pattern data having the same rate as the data of the channel CH1, e.g., a periodic pattern symbol sequence. The test pattern data, or simply test pattern, is fed to the channel CH1 input of the second MUX/DEMUX 2. The second MUX/DEMUX 2 multiplexes the input test pattern with the data on the second to fourth lower sequence channels CH2 to CH4 and feeds the resulted data to the switching circuit 3 via the higher sequence output thereof. Since the higher sequence input and output of the MUX/DEMUX 2 are short-circuited in the switching circuit 3 as stated earlier, the multiplexed test patterns are simply returned to the higher sequence input of the MUX/DEMUX 2. In response, the MUX/DEMUX 2 demultiplexes the multiplexed data into individual data and sends them out via the associated lower sequence channels CH1 to CH4. Hence, the test pattern applied to the channel CH1 input of the MUX/DEMUX 2 is returned to the monitor 4 via the channel CH1 output. The monitor circuit 41, therefore, is capable of monitoring the circuit associated with the channel CH1 of the MUX/DEMUX 2 by checking the result of reception. This is also true with the other test pattern generating circuits 42 and monitor circuits 41 which are associated with the channels CH2 to CH4. This allows the monitor 4 to monitor all the stand-by circuits which are built in the MUX/DEMUX 2. Meanwhile, the first MUX/DEMUX 1 multiplexes and demultiplexes data coming in over external lines. In the circuitry of Fig. 1 representative of the prior art monitoring method, the test pattern applied to the channel CH1 of the MUX/DEMUX 2 will be preserved if the stand-by circuit associated with the channel CH1 is normal. On the other hand, the stand-by circuits can obviously be monitored even if the test pattern meant for the channel CH2 is applied to the other channels CH2 to CH4 also. Based on these facts, the present invention proposes a monitoring method for stand-by circuits which allows the individual channels to share a single test pattern.

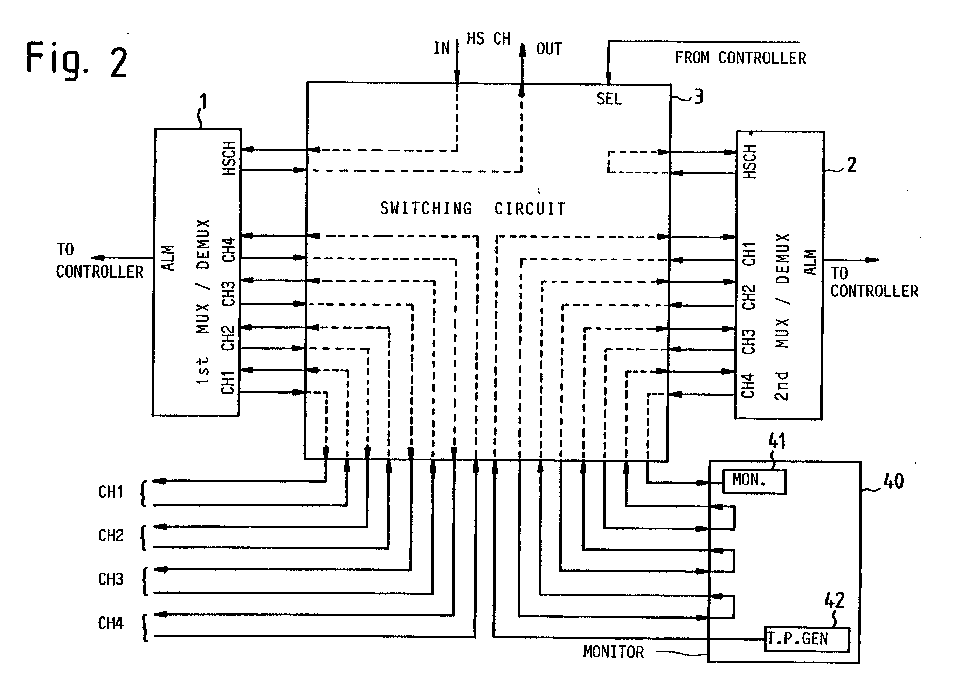

Referring to Fig. 2, a first embodiment of the present invention applicable to the apparatus of Fig. 1 is shown in a schematic block diagram. As shown, it is only a monitor 40 that distinguishes the illustrative embodiment from the prior art of Fig. 1. Specifically, the monitor 40 has only a test pattern generating circuit 42 associated with the channel CH1 of Fig. 1, and a monitor circuit 41 associated with the channel CH4. A test pattern generated by the test pattern generating circuit 42 is multiplexed and demultiplexed by the second MUX/DEMUX 2 and then returned to the monitor 40 in the same manner as in the case of Fig. 1. The monitor 40 returns the received test pattern to use it as a test pattern for the channel CH2. As the monitor 40 returns the test pattern to the other channels CH3 and CH4 also, the monitor circuit 41 monitors the test pattern received from the channel CH4 last. This kind of configuration implements the monitor 40 in far smaller configurations and at far lower cost than the prior art.

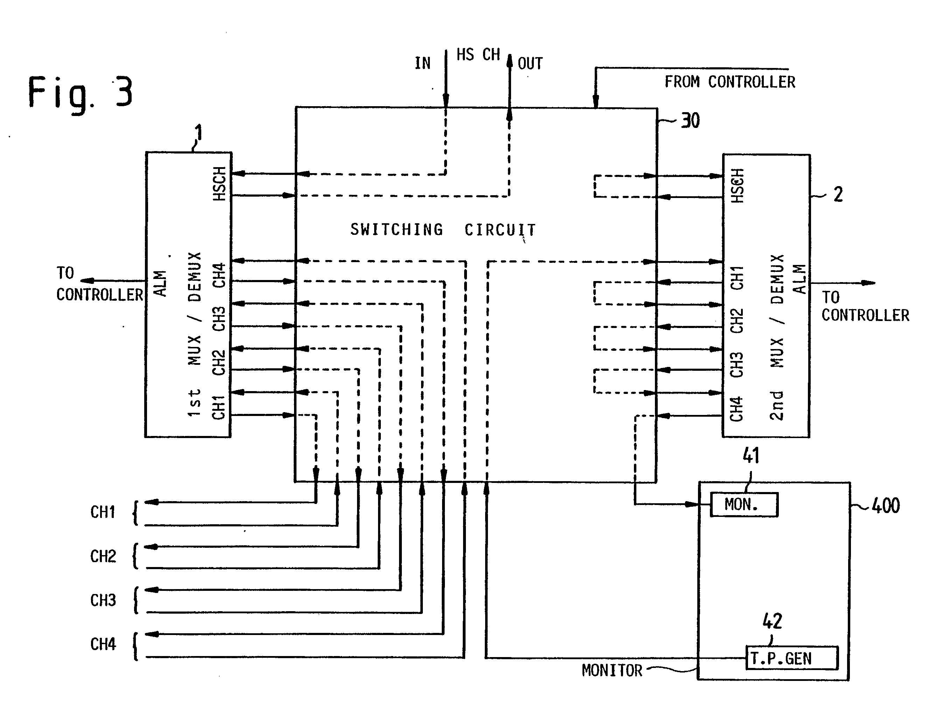

Fig. 3 is a block diagram representative of a second embodiment of the present invention. In this particular embodiment, the test pattern is returned not by a monitor 400 but by a switching circuit 30. While the monitor 400 monitors the test pattern in the same manner as the monitor 40 of Fig. 2, causing the switching circuit 30 to return the test pattern is successful in reducing the number of terminals of the switching circuit 30 and monitor 400 and in eliminating the need for wirings between the switching circuit 30 and the monitor 400.

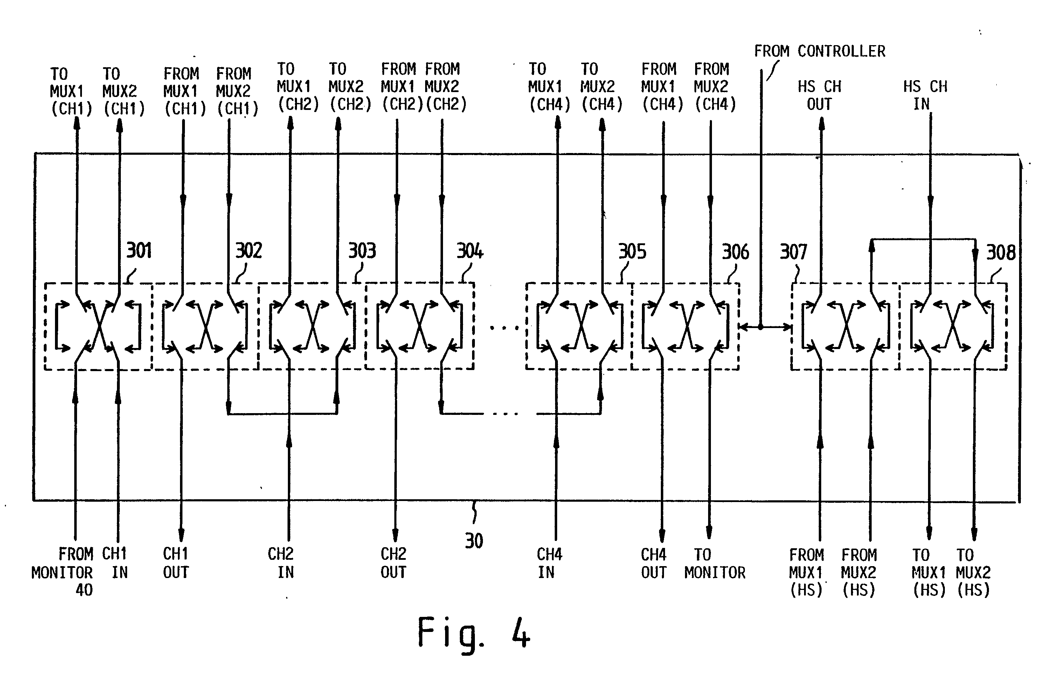

A specific construction of the switching circuit 30 is shown in Fig. 4. As shown, the switching circuit 30 is made up of switched 301 to 308 each having two inputs and two outputs. In the figure, two switches associated with the channel CH3 are not shown. Assigned to the channel CH1, the first switch 301 received data over the channel CH1 and the test pattern from the monitor 400 and, under the control of a controller, not shown, feeds one of them to the first MUX/DEMUX 1 and the other to the second MUX/DEMUX 2. Since the first MUX/DEMUX 1 is assumed to be active, the switch 301 is conditioned as shown in the figure. The second switch 302 receives data of the channel CH1 demultiplexed by the MUX/DEMUXs, delivers data from the active MUX/DEMUX 1 as channel CH1 data, and returns data from the stand-by MUX/DEMUX 2, i.e., the test pattern to one input of the third switch 303. The third and fourth switches 303 and 304 function in the same manner as the first and second switches 301 and 302, respectively. In such a configuration, data of the channel CH4 appears on one output of the sixth switch 306, while the test pattern routed through all the stand-by circuits to be monitored appears on the other output of the switch 306. The test pattern from the switch 306 is fed to the monitor 400. The seventh and eighth switches 307 and 308 are assigned to the higher sequence channel. Specifically, the seventh switch 307 receives the multiplexed outputs of the MUX/DEMUXs 1 and 2, sends out the multiplexed output of the MUX/DEMUX 1 as higher sequence channel data, and returns the multiplexed output of the MUX/DEMUX 2, i.e., the multiplexed test pattern to one input of the eighth switch 308. The eighth switch 308 receives higher sequence channel data from the outside at its other input, and feeds the higher sequence channel data to the MUX/DEMUX 1 and the multiplexed test pattern returned from the seventh switch 307 to the MUX/DEMUX 2. While a controller, not shown, delivers a control signal to all the switches 301 to 308, only a part of such an arrangement necessary for the understanding of the illustrative embodiment is illustrated for simplicity. When the second MUX/DEMUX 2 is an active unit, the connection of all the switches 301 to 308 shown in Fig. 4 will be reversed.

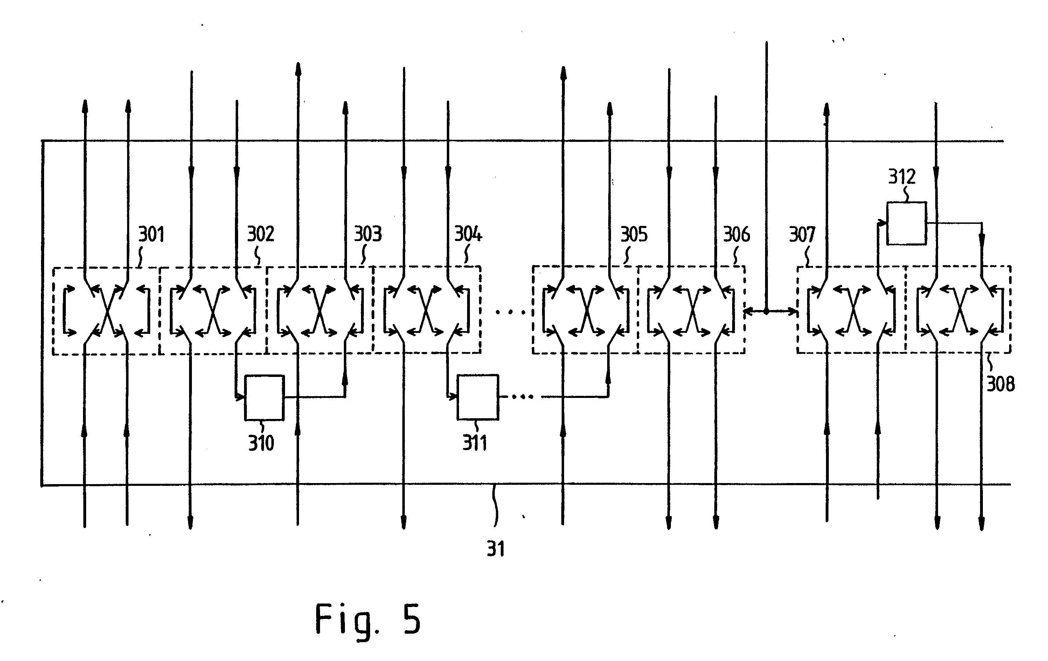

In the apparatus shown in Fig. 3, the MUX/DEMUXs 1 and 2 each may be of the type having a receiving circuit which is highly sensitive for receiving a signal having been attenuated or otherwise effected on a transmission path, or a transmitting circuit the output signal of which is corrected beforehand in order to compensate for the expected weakening and level decrease of a waveform ascribable to a transmission path. In such a case, the switching circuit may be constructed as shown in Fig. 5. Specifically, when the MUX/DEMUXs 1 and 2 are of the above-mentioned type, returning the monitoring signal directly to the lower sequence circuits is apt to disturb the operations of receiving sections included in the lower sequence circuits. In the light of this, the circuitry shown in Fig. 5 has level correcting circuits in the form of BONs (Building Out Networks) 310 to 312 on the paths along which the monitoring signal is returned, thereby promoting accurate circuit monitoring. As is well known, the BON includes resistors, capacitors and coils. Regarding the rest of the construction and operation, the circuitry of Fig. 5 is essentially the same as the circuitry of Fig. 4.

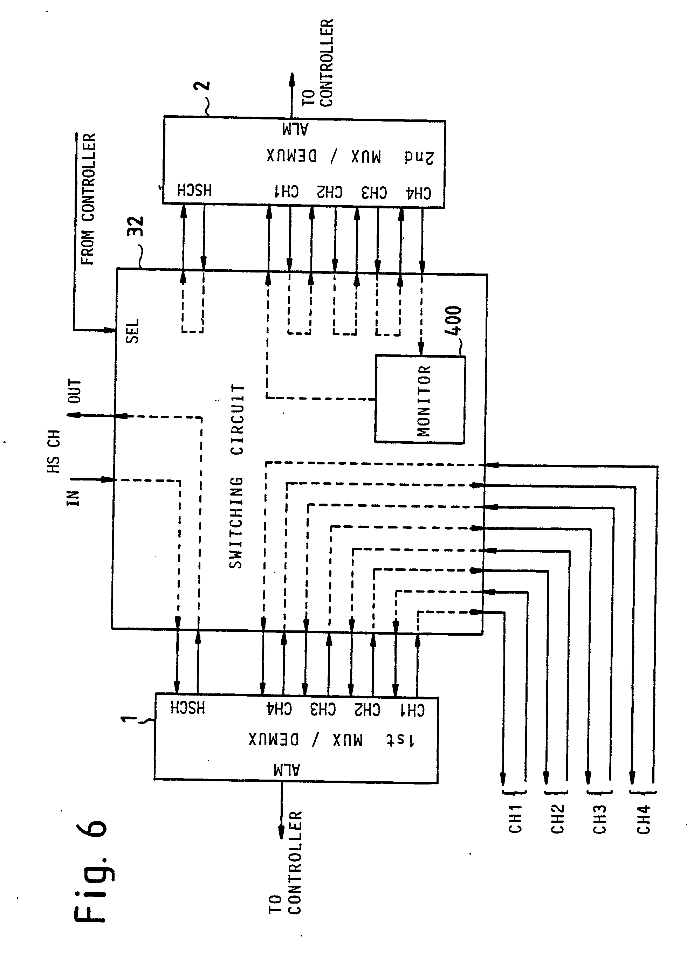

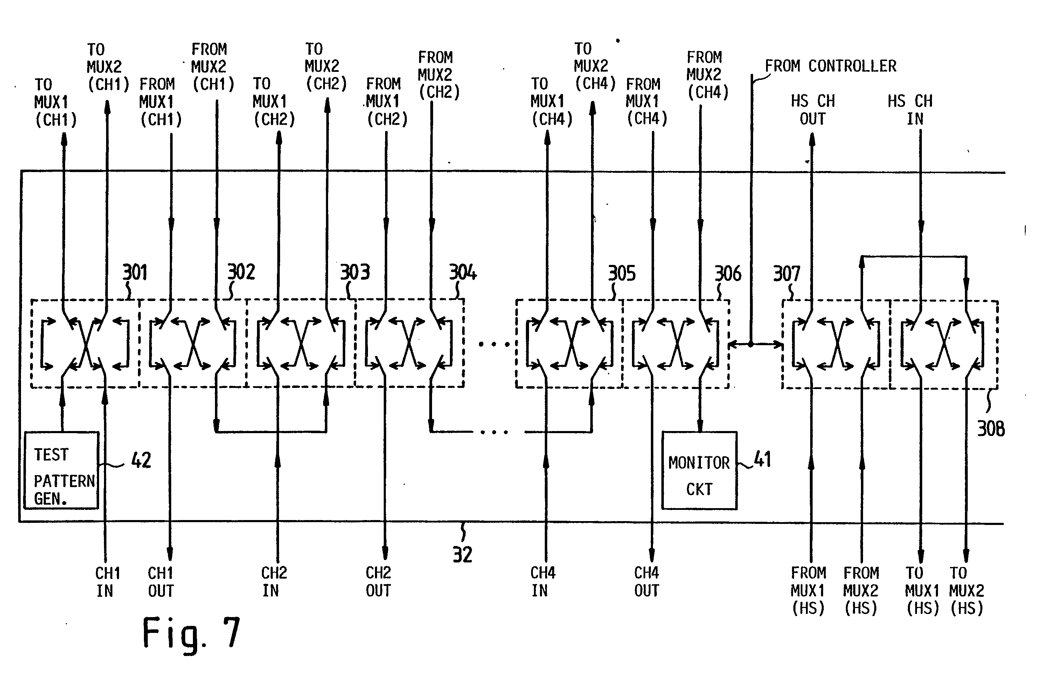

Referring to Fig. 6, another alternative embodiment of the present-invention will be described. This embodiment is similar to the embodiment of Fig. 3 except that the monitor 400 is built in the switching circuit 32. A specific construction of the switching circuit 32 with the built-in monitor 400 is shown in Fig. 7. In Fig. 7, the test pattern generating circuit 42 and the monitor circuit 41 are directly interconnected to one input of the first switch 301 and one output of the sixth switch 306, respectively. The build-in monitor 400 operates in the same manner as in the embodiment of Fig. 3. This particular embodiment is advantageous in that signal lines and connecting terminals are not necessary between the switching circuit 30 and the monitor 400, and in that the monitor 400 substantially does not need an exclusive space for installation.

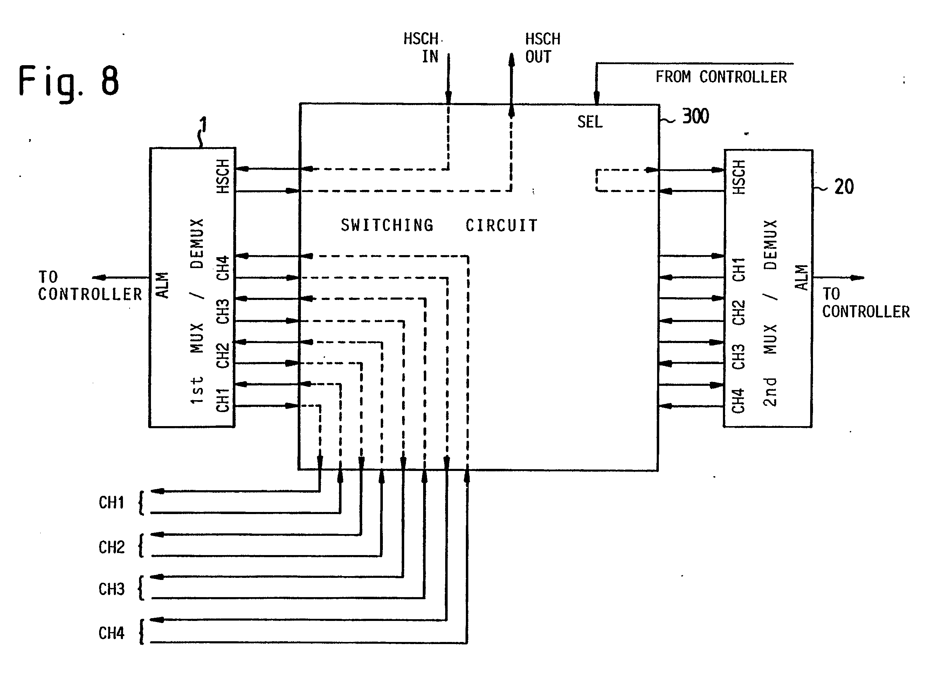

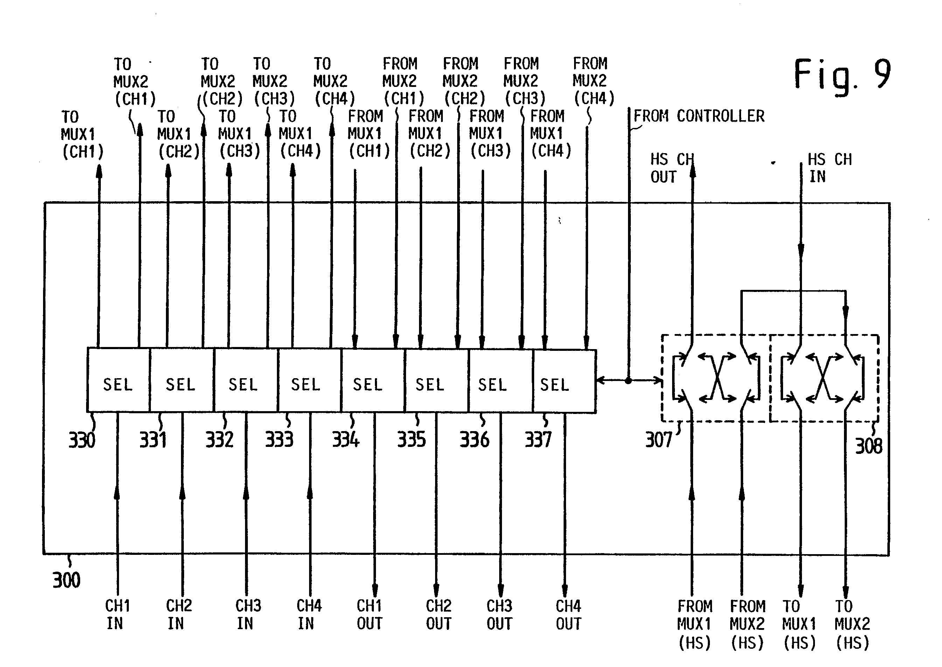

Fig. 8 shows another alternative embodiment of the present invention in which the monitor 400 shown in Fig. 6 is built in each of a first and a second MUX/DEMUX 10 and 20 which are to be monitored, i.e., the test pattern is repetitively returned within the MUX/DEMUX 10 or 20. Fig. 9 depicts a specific construction of a switching circuit 300 particular to this embodiment. Since the test pattern is returned within the MUX/DEMUX 10 or 20, the switching circuit 300 is simpler in construction than the switching circuits of any of the first to third embodiments. As shown in Fig. 9, the inputs and outputs of the lower sequence channels may be implemented by selectors having one input and two outputs and selectors having two inputs and one output. A first to a fourth selector 330 to 333 deliver respectively the data of the lower sequence channels CH1 to CH4 to the first MUX/DEMUX 1 or the second MUX/DEMUX 2. On the other hand, a fifth to an eighth selector 334 to 337 receive demultiplexed signals from the first and second MUX/DEMUXs 1 and 2 and send out one of them as the data of the lower sequence channels CH1 to CH4, respectively. Since the first MUX/DEMUX 1 is assumed to be active, all the selectors 330 to 337 select the first MUX/DEMUX 1. In the switching circuit 300, the operation associated with the higher sequence channel and, therefore, the switch construction is not changed. A controller, not shown, feeds a control signal to all the selectors 330 to 337 and switches 307 and 308, although not shown in the figure.

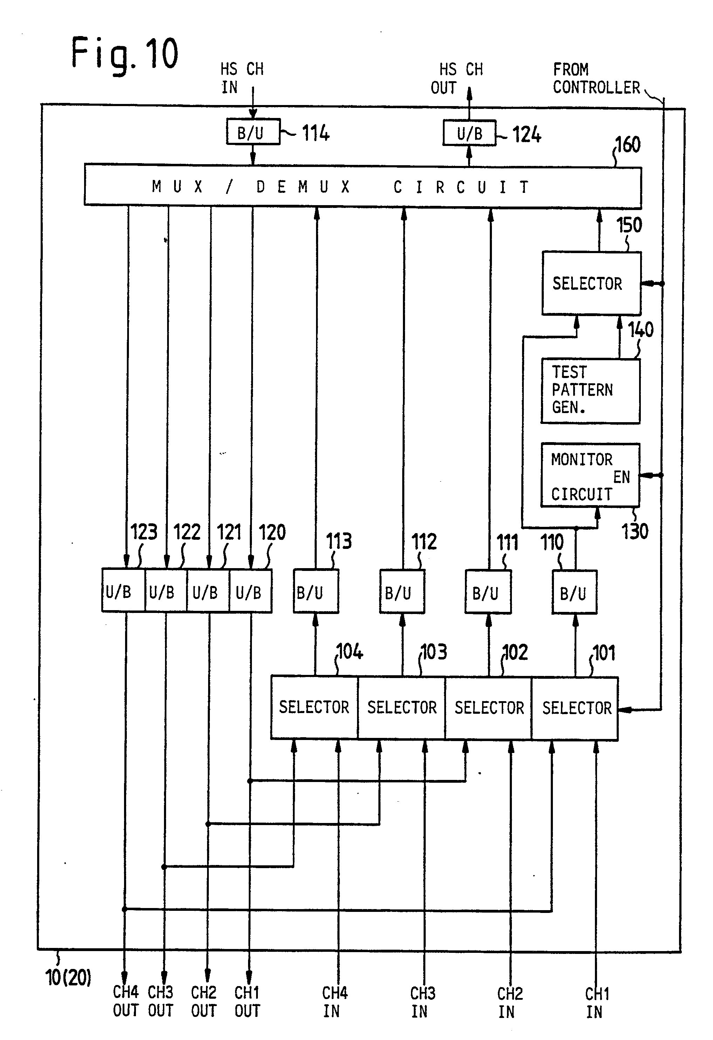

Referring to Fig. 10, a specific construction of the MUX/DEMUX 10 for practicing the embodiment of Fig. 8 is shown. Since the MUX/DEMUX 20 has the same structure as the MUX/DEMUX 10, the MUX/DEMUX 10 is described hereinafter. As shown, the MUX/DEMUX 10 has a first to a fourth selector 101 to 104, a first to a fifth bipolar-to-unipolar (B/U) converting circuit 110 to 114, a first to a fifth unipolar-to-bipolar (U/B) converting circuit 120 to 124, a MUX/DEMUX circuit 160, a test pattern generating circuit 140, a monitor circuit 130, and a fifth selector 150. The B/U converting circuits 110 to 114 and U/B converting circuits 120 to 124 allow the use of a signal having a bipolar format on a transmission path and a unipolar format within the MUX/DEMUX 10.

The selectors 101 to 104 are associated with the lower sequence channels CH1 to CH4, respectively. The selector 101 to 104 each receives lower sequence channel data at one input thereof and the returned test pattern at the other input thereof, while selecting and outputting one of the data and test pattern. The B/U converting circuits 110 to 113 are also respectively associated with the lower sequence channels for transforming the format of the outputs of the selectors 101 to 104 from bipolar to unipolar. The test pattern generating circuit 140 has the same construction as the test pattern generating circuit 42 of any of the previous embodiments as far as a pattern generating section is concerned. The selector 150 selectively outputs one of the test pattern and the output of the B/U converting circuit 110. The MUX/DEMUX circuit 160 multiplexes the output signals of the selector 150 and the B/U converting circuits 111 to 113 and supplies a multiplexed signal to the fifth U/B converting circuit 124. The fifth U/B converting circuit 124 converts the multiplexed signal into bipolar form and outputs the converted signal as a higher bit rate sequence data. The fifth B/U converting circuit 114 converts the higher bit rate sequence data from the switching circuit 300 into unipolar form and supplies the data sequence to the MUX/DEMUX circuit 160. The MUX/DEMUX circuit 160 demultiplexes the data sequence from the B/U converting circuit 114 and feeds the resulted signals to the U/B converting circuits 120 to 123. The monitor circuit 130 receives the output of the B/U converting circuit 110 for detecting an error. Assuming that the MUX/DEMUX shown in Fig. 10 is in stand-by state, then a controller, not shown, feeds control signals to the stand-by MUX/DEMUX such that the selector 101 selects the output of the U/B converting circuit 123, the selectors 102 to 104 select the outputs of the U/B converting circuits 120 to 122, respectively, and the selector 150 selects the output of the test pattern generating circuit 140. The monitor circuit 130 has an enable terminal to which a control signal from the controller is applied to enable it. The test pattern from the test pattern generating circuit 140 is fed to the MUX/DEMUX circuit 160 via the selector 150. The MUX/DEMUX circuit 160 multiplexes the test pattern from the selector 150 with the data of the first lower sequence channel CH1 and delivers the multiplexed data to the U/B converting circuit 124. The U/B converting circuit 124 converts the signal form of the multiplexed data and outputs the converted signal as higher sequence channel data. This multiplexed signal is returned from the switching circuit 300 to be applied to the MUX/DEMUX circuit 160 as higher sequence data after the B/U convertion at the B/U converting circuit 114. In response, the MUX/DEMUX circuit 160 demultiplexes the received signal and feeds the individual signals to the U/B converting circuits 120 to 123 which are associated with the lower sequence channels CH1 to CH4, respectively. At this time, the test pattern meant for the channel CH1 is applied to the U/B converting circuit 120. The U/B converted test pattern is fed out as channel CH1 data and, at the same time, applied to one input of the selector 102. Since the selector 102 is conditioned to select the output of the U/B converting circuit 120, the test pattern routed through the channel CH1 is subjected to B/U conversion at the B/U converting circuit 111 and then directly applied to the channel CH2. Thereafter, the test pattern is processed in the same manner as the test pattern applied to the channel CH1, then routed through the U/B converting circuit 121 and selector 103 to the channel CH3, and then applied to the channel CH4 in the same manner. The output of the U/B converting circuit 123 is fed as channel CH4 data to the switching circuit 300 and selector 101. In this instance, the output of the second MUX/DEMUX 2 does not effect the operation of the system because the switching circuit 300 does not select it. The selector 101, like the other selectors 102 to 104, is conditioned to select the output of the U/B converting circuit 123 associated therewith, so that the test pattern is routed through the B/U converting circuit 110 to the monitor circuit 130. The monitor circuit 130 determines whether or not an error has occurred in the stand-by circuits by checking the received test pattern. When the MUX/DEMUX shown in Fig. 10 is in an active state, the selectors 101 to 104 will select the data of the lower sequence channels CH1 to CH4, the selector 150 will select the output of the B/U converting circuit 110, and the monitor circuit 130 will be disenabled. The illustrative embodiment having the test pattern generating circuit 140 and monitor circuit 130 which are built in the MUX/DEMUX 10 is advantageous in that the switching circuit 300 is simplified in construction, and in that switches for returning the test pattern are not necessary. Another advantage attainable with this embodiment is that since the test pattern ·is fed and received without the intermediary of transmission paths, it is not necessary to provide a U/B converting circuit at the output side of the test pattern generating circuit 140 or to provide a B/U converting circuit at the input side of the monitor circuit 130.

In summary, it will be seen that the present invention provides a stand-by circuit monitoring method which, in a system of the type monitoring a stand-by circuit by comparing an input and an output state of a test pattern or similar monitoring signal, needs only a single monitoring signal generating circuit and a single monitoring signal receiving circuit with no regard to the number of the stand-by circuits. This is successful in reducing required space, cost, and power consumption. Such unprecedented advantages are derived from a unique construction wherein an output signal of a certain stand-by circuit is used as a monitoring signal for another stand-by circuit, and such a procedure is repeated until the monitoring signal has been returned to the monitor circuit by way of all the stand-by circuits.

Various modifications will become possible for those skilled in the art after receiving the teachings of the present disclosure without departing from the scope thereof. For example, while the switches in the switching circuit of the illustrative embodiments are implemented by relays, the relays may be replaced with switches using transistors or switching means using memories. The present invention is applicable not only to a multiplexing/demultiplexing apparatus but also to any other apparatuses so long as they preserve the state of a test pattern when stand-by circuits are free from errors.

## Claims

1. A method of monitoring a plurality of independent stand-by circuits included in a stand-by device which will be used when an active device fails, comprising the steps of:
generating a monitoring signal for monitoring the plurality of stand-by circuits;
applying the monitoring signal to one of the plurality of stand-by circuits;
performing a repective operation of feeding the monitoring signal routed through said one stand-by circuit to another stand-by circuit to which said monitoring signal has not been applied; and
determining whether or not the plurality of stand-by circuits are normally operable on the basis of the monitoring signal having been routed through all of said plurality of stand-by circuits.

2. A multiplexing/demultiplexing system comprising:
first multiplexer/demultiplexer means for multiplexing m (m > 1, natural number) lower bit rate sequence channels into n (n < m, natural number) higher bit rate sequence channels and demultiplexing said n higher bit rate sequence channels into said m lower bit rate sequence channels;
second multiplexer/demultiplexer means having the same construction as said first multiplexer/demultiplexer;
monitor means comprising monitoring signal generating means for generating a monitoring signal for monitoring circuits which constitute said first and second multiplexer/demultiplexer means, and error detecting means for determining whether or not an error has occurred in said circuits by examining the monitoring signal; and
switching circuit means interconnected to said m lower bit rate sequence channels, said n higher bit rate sequence channels, inputs and outputs of said first and second multiplexer/demultiplexer means, and an input and an output of said monitor means for interconnecting, in response to a selection signal fed from the outside, said m lower bit rate sequence channels and said n higher bit rate sequence channels to one of said first and second multiplexer/demultiplexer means, interconnecting said input and output of said monitor means to the lower bit rate sequence channel inputs and outputs, and short-circuiting the higher bit rate sequence channel inputs and outputs;
said monitor means comprising:
means for feeding the monitoring signal to said switching circuit means as data of, among the m lower bit rate sequence channels, a first channel;
(m - 1) returning means for returning the monitoring signal received from said switching means and fed as the data of the first channel to feed said monitoring signal to said switching circuit means as data of, among the m lower bit rate sequence channels, a second lower bit rate sequence channel, and subsequently receiving and returning the monitoring signal fed to said switching circuit means as data of, among the m lower bit rate sequence channels, an x-th (x = 2, 3, ..., m - 1) channel to feed said monitoring signal to said switching circuit means as data of an (x = 1) channel; and
means for causing said error detecting circuit means to receive a received signal from, among the m lower bit rate sequence channels, an m-th lower bit rate sequence channel.

3. A multiplexing/demultiplexing system comprising:
first multiplexer/demultiplexer means for multiplexing m (m > 1, natural number) lower bit rate sequence channels into n (n < m, natural number) higher bit rate sequence channels and demultiplexing said n higher bit rate sequence channels into said m lower bit rate sequence channels;

second multiplexer/demultiplexer means having the same construction as said first multiplexer/demultiplexer;

monitor means comprising monitoring signal generating means for generating a monitoring signal for monitoring circuits which constitute said first and second multiplexer/ demultiplexer means, and error detecting means for determining whether or not an error has occurred in said circuits by receiving said monitoring signal; and

switching circuit means interconnected to said m lower bit rate sequence channels, said n higher bit rate sequence channels, inputs and outputs of said first and second multiplexer/demultiplexer means, and an input and an output of said monitor means, said switching circuit means comprising first switch means for interconnecting, in response to a selection signal fed from the outside, said m lower bit rate sequence channels and said n higher bit rate sequence channels to one of said first and second multiplexer/demultiplexer means, second switch means for interconnecting said input and output of said monitor means to the lower bit rate sequence channel inputs and outputs, and third switch means for short-circuiting the higher bit rate sequence channel inputs and outputs.

said second switch means comprising:

means for feeding the monitoring signal received from said monitoring signal generating means as an input signal to, among the m lower bit rate sequence channels of the other multiplexer/demultiplexer means, a first lower bit rate sequence channel;

switch means for returning the monitoring signal received as an output signal of said the first lower bit rate channel to feed said monitoring signal as an input signal to, among the m lower bit rate sequence channels, a second lower bit rate sequence channel, and subsequently receiving and returning the monitoring signal fed to said switch means as data of, among said m lower bit rate sequence channels, an x-th (x = 2, 3, ..., m - 1) lower bit rate sequence channel to output said monitoring signal as data of a (x + 1) lower bit rate channel; and

means for feeding a received signal from, among the m lower bit rate sequence channels, an m-channel lower bit rate sequence channel to said error detecting circuit means.

4. A multiplexing/demultiplexing system as claimed in claim 3, wherein said monitor means is built in said switching circuit means.

5. A multiplexing/demultiplexing system comprising:

first multiplexer/demultiplexer means for multiplexing m (m > 1, natural number) lower bit rate sequence channels into n (n < m, natural number) higher bit rate sequence channels;

second multiplexer/demultiplexer means having the same construction as said first multiplexer/demultiplexer; means; and

switching circuit means interconnected to said m lower bit rate sequence channels, said n higher bit rate sequence channels, inputs and outputs of said first and second multiplexer/demultiplexer means, and an input and an output of said monitor means, said switching circuit comprising first switch means for interconnecting, in response to a selection signal fed from the outside, said m lower bit rate sequence channels and said n higher bit rate sequence channels to one of said first and second multiplexer/demultiplexer means, and second switch means for short-circuiting a higher bit rate sequence channel input and a higher bit rate sequence channel output;

said first multiplexer/demultiplexer means comprising:

monitoring signal generating means for generating a monitoring signal for monitoring circuits of said first multiplexer/demultiplexer means;

first selector means for receiving an input signal to, among the m lower bit rate sequence channels, a first lower bit rate sequence channel as a first input signal and receiving an output signal of an m-th lower bit rate sequence channel as a second input signal, and outputting one of said first and second input signals as a first selected output signal in response to a control signal which is fed from the outside;

(m - 1) i-th selector means for receiving an input signal to, among the m lower bit rate sequence channels, an i-th (i = 2, 3, ..., m - 1, m) lower bit rate sequence channel as a first input signal and receiving an output signal of an (i - 1) lower bit rate sequence channel as a second input signal, and outputting one of said first and second input signals as an i-th selected output signal in response to the control signal;

error detecting circuit means for receiving said first selected output signal in response to the control signal to determine whether or not any of the circuits of said first multiplexer/demultiplexer means has failed;

(m + 1)-th selector means for receiving said first selected output signal as a first input signal and the monitoring signal as a second input signal, and outputting one of said first and second input signals as n (m + 1)-th selected output signal; and

multiplexing and demultiplexing circuit means for multiplexing and outputting said (m + 1)-th selected output signal and said (m - 1) i-th (i = 2, 3, ..., m - 1, m) selected output signals to the n higher bit rate sequence channels, and demultiplexing and outputting the received n higher bit rate sequence channels to the m lower bit rate sequence channels.

# Fig. 1 PRIOR ART

EP 0 400 603 A2

# Fig. 2

EP 0 400 603 A2

# Fig. 3

IN    HS CH    OUT                    FROM CONTROLLER

30

SWITCHING CIRCUIT

1

ALM    1st MUX / DEMUX    HSCH    CH4    CH3    CH2    CH1

TO CONTROLLER

2

HSCH    CH1    CH2    CH3    CH4    2nd MUX / DEMUX    ALM

TO CONTROLLER

CH1 {

CH2 {

CH3 {

CH4 {

41

MON.

400

42

T.P.GEN

MONITOR

EP 0 400 603 A2

Fig. 4

Fig. 5

# Fig. 6

HS CH

IN    OUT

FROM CONTROLLER

SEL    32

SWITCHING CIRCUIT

1st MUX / DEMUX

HSCH

ALM

CH4 CH3 CH2 CH1

TO CONTROLLER

MONITOR

400

2nd MUX / DEMUX

HSCH

CH1 CH2 CH3 CH4

ALM

TO CONTROLLER

2

CH1

CH2

CH3

CH4

EP 0 400 603 A2

Fig. 7

EP 0 400 603 A2

# Fig. 8

EP 0 400 603 A2

Fig. 9

EP 0 400 603 A2

# Fig. 10